# DEMANDE DE BREVET EUROPEEN

(11) **EP 0 897 833 A1**
(43) Date de publication de la demande: **24.02.1999**
(21) Numéro de dépôt: 98402054.5
(22) Date de dépôt: 13.08.1998
(51) Int. Cl.: B60R 9/06

(54) **Porte-bagages articulé**

(30) Priorité: 18.08.1997 FR 9710431
(71) Demandeur: Jobart, Jean-Louis, F-77210 Samoreau (FR)
(72) Inventeur: Jobart, Jean-Louis, F-77210 Samoreau (FR)

(57) **Abrégé**

Dispositif pour fixer des charges sur l'arrière d'un véhicule et conserver, à l'arrêt du véhicule, la possibilité d'utiliser la porte ou le hayon arrière situé sur sa face arrière, même quand cette face arrière est sensiblement verticale. Pour cela, le dispositif peut être incliné pour permettre l'accès à la porte arrière du véhicule et le débattement de celle-ci lors de son ouverture. Le système comprend un dispositif d'immobilisation pratique d'utilisation et sûr en position route et, sous certaines formes de réalisations, peut être fixé sur un dispositif d'attelage de remorque sans interdire l'utilisation du dispositif d'attelage pour la traction d'une remorque.

## Description

L'utilisation de porte-bicyclettes fixé sur l'arrière de véhicules s'est développée notamment parce qu'il permet de diminuer l'effet de freinage conséquence de la fixation de charges sur le toit d'un véhicule et que la mise en place des bicyclettes sur un support situé à hauteur réduite est plus aisée.

Ces systèmes présentent l'inconvénient d'interdire l'ouverture de la porte arrière quand le système est monté sur le véhicule.

Le brevet US 5056700 décrit un dispositif comportant une monture recevant les bicyclettes, cette monture étant posée sur l'arrière du véhicule et fixée par des sangles en différents points de l'arrière du véhicule. Des dispositifs voisins ont été décrits également dans les brevets FR 2668435, EP 0671295, FR 2699874, FR 2710596. Tous ces dispositifs présentent l'inconvénient d'interdire l'usage de la porte arrière ou du hayon arrière quand ils sont utilisés.

Les brevets FR 2731189, FR 2728213, EP 0710588, EP 0666197, EP 0665135, EP 0583311, FR 2689468, décrivent différents systèmes généralement fixés sur un attelage de remorque qui interdisent l'usage d'une porte ou d'un hayon arrière quand le débattement de la porte ou du hayon se fait vers l'arrière ce qui est le cas de tous les véhicules "monospace" ou ayant une paroi arrière dont la pente est supérieure à environ 100 %.

Le brevet FR 2587948 et la demande WO 9414634 décrivent des systèmes permettant l'usage d'un coffre arrière dont la porte est sensiblement horizontale mais l'existence de parties fixes verticales sur l'arrière du véhicule ne permet pas son adaptation pour des portes non horizontales, le système de verrouillage est peu pratique et peu sûr et il reste une partie fixe peu esthétique quand la partie amovible est enlevée.

Le dispositif, objet de la présente invention, permet de fixer des charges sur l'arrière d'un véhicule et de conserver, à l'arrêt du véhicule, la possibilité d'utiliser la porte ou le hayon arrière situé sur sa face arrière, même quand cette face arrière est sensiblement verticale. En effet, le dispositif peut être incliné pour permettre l'accès à la porte arrière du véhicule et le débattement de celle-ci lors de son ouverture. Le système comprend un dispositif d'immobilisation, pratique d'utilisation et sûr, en position route et, sous certaines formes de réalisations, peut être fixé sur un dispositif d'attelage de remorque sans interdire l'utilisation du dispositif d'attelage pour la traction d'une remorque.

Enfin, le système, objet de ce brevet, comprend deux parties principales, une fixe et une mobile et, en cas de non utilisation, la partie mobile peut être très facilement enlevée pour ne laisser, sur le véhicule, qu'une partie fixe discrète de taille réduite, voir complètement dissimulée pour ne pas nuire à l'esthétique du véhicule.

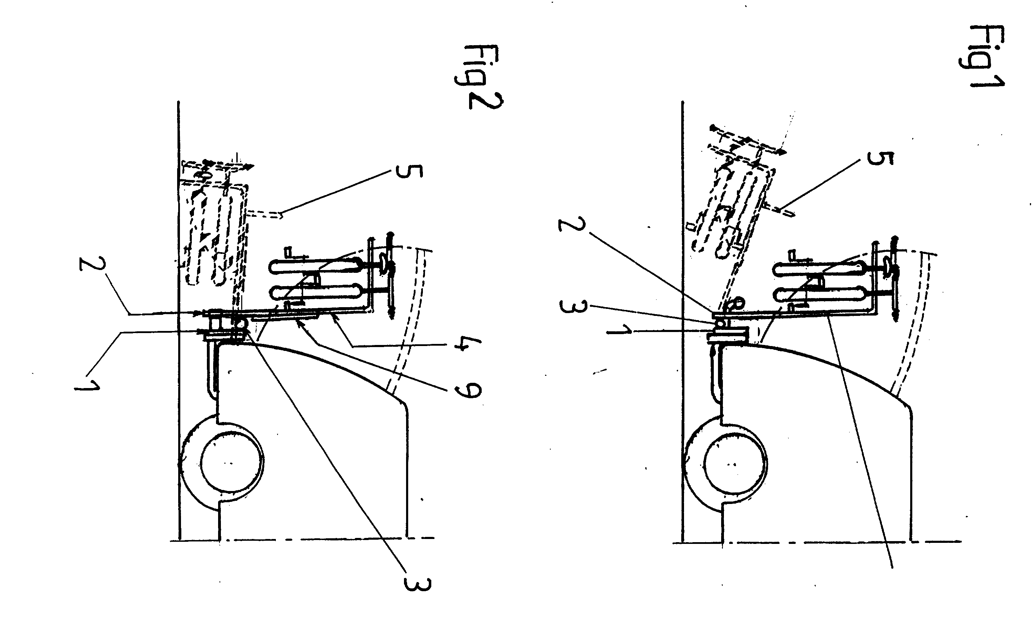

Le dispositif, selon l'invention (fig. 1, 2, 3), comporte un support fixe (1) adapté sur le bas de l'arrière du véhicule, un porte charge mobile (2) articulé sur le support fixe (1) autour d'un axe sensiblement horizontal (3) et perpendiculaire au sens de déplacement du véhicule, supporté par le support fixe (1) et situé dans une zone délimitée en hauteur entre le sol et la partie basse de la porte ou du hayon arrière du véhicule et en position horizontale dans une zone comprise entre 20 cm en arrière du véhicule et 50 cm en avant de l'arrière du véhicule. Le porte charge mobile, en position route, c'est-à-dire permettant le déplacement du véhicule, comporte un support de bicyclette composé d'une ou de plusieurs parties sensiblement verticales et d'une partie (ou de plusieurs) sensiblement horizontales à l'extrémité supérieure de la ou des parties verticales. Les bicyclettes sont posées et attachées sur la (ou les) parties horizontales, par une partie de leurs cadres, de leurs guidons, de leurs selles ou de leurs porte-bagages. En position route, le porte charge mobile (2) est verrouillé en position haute sur la partie fixe par un dispositif assurant une manoeuvre à partir de la partie supérieure du porte charge mobile (2) pour rendre cette manoeuvre aisée. A l'arrêt du véhicule, le porte charge mobile (2) peut être déverrouillé et, par rotation, s'incliner vers l'arrière dégageant aussi l'arrière du véhicule pour permettre l'ouverture de la porte ou du hayon arrière. En position déverrouillée, on fait reposer la partie mobile (2) sur le sol directement ou par l'intermédiaire de la bicyclette fixée le plus à l'extérieur. La manoeuvre du porte charge mobile (2) se fait après déverrouillage par prise en main de la partie extérieure de la partie horizontale pour avoir un effort réduit, le bras de levier étant alors le plus grand.

Nous décrivons, ci-après, différents types de réalisations, à l'aide des figures suivantes :
- Figure 1 : Première réalisation du dispositif
- Figure 2 : Deuxième réalisation du dispositif
- Figure 3 : Troisième réalisation du dispositif
- Figure 4 (a),(b),(c) : Détail de réalisation de la première réalisation
- Figure 5 : Détail de réalisation de la première réalisation
- Figure 6 : Détail de réalisation d'une partie du verrouillage de deux parties du système
- Figure 7 : Variante de réalisation d'une partie du verrouillage de deux parties du système
- Figure 8 : Variante de la première réalisation
- Figure 9 : Détail de la variante de la première réalisation
- Figure 10 : Représentation détaillée de la troisième réalisation

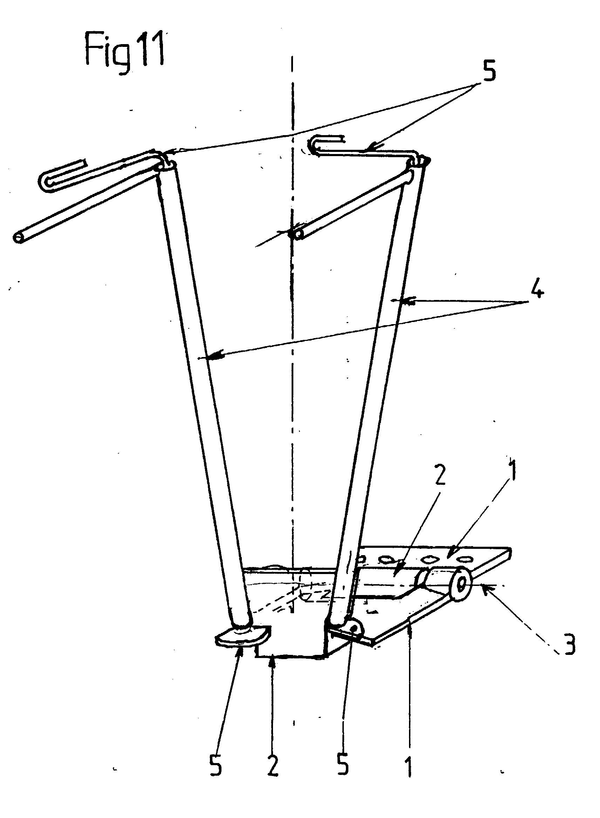

- Figure 11 : Variante de la représentation détaillée de la troisième réalisation (portant sur une modification du système de verrouillage)
- Figure 12 (a), (b) : Variante d'exécution de l'articulation de la première réalisation
- Figure 13 : Schéma de réalisation d'un verrouillage et d'un maintien en position par sangles

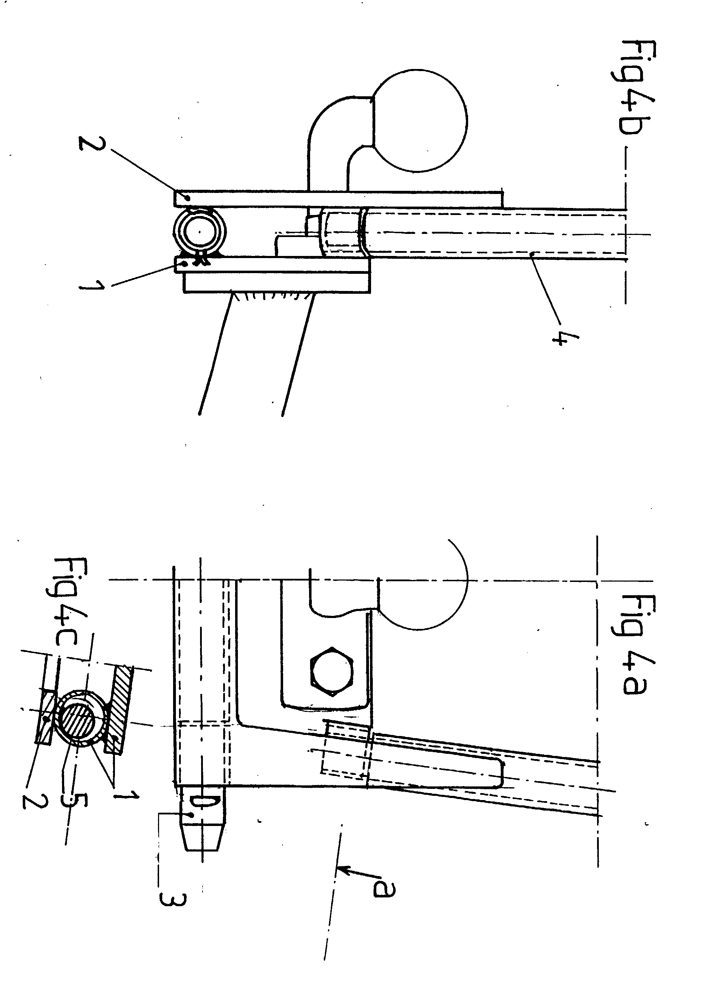

Nous décrivons une première réalisation de l'invention (selon les figures 1, 4a, 4b, 4c, 5). Le dispositif comprend un support fixe (1) attaché sur la partie arrière basse du véhicule, soit directement sur le châssis du véhicule, soit sur un dispositif d'attelage de remorque déjà installé. Dans le cas où le support fixe (1) est fixé directement sur la carrosserie du véhicule, il comporte un dispositif de fixation réalisé selon les recommandations du constructeur. Dans le cas où le support fixe (1) est attaché à un dispositif d'attelage de remorque (fig 4b), ce support vient s'intercaler entre l'attelage et le crochet ou boule de remorquage et peut utiliser les boulons de fixation du crochet d'attelage.

Le support fixe (1) comporte un support d'axe (3), cet axe étant horizontal et perpendiculaire au sens de déplacement du véhicule. L'axe (3) est situé en-dessous du crochet d'attelage et sensiblement dans le plan de la surface de liaison crochet d'attelage/l'attelage de remorque.

Un porte charge mobile (2) vient s'articuler sur l'axe (3) et pivote autour de cet axe d'avant en arrière selon un angle maximum d'environ 90°. Le porte charge mobile (2) comporte deux tubes (4) qui sont dans un plan sensiblement vertical quand le porte charge mobile est en position relevée (ou position de route). Les deux tubes sont symétriques par rapport au plan axial du véhicule et légèrement orientés vers l'extérieur (pour leurs parties hautes). Ces tubes, d'une longueur droite d'environ lm, sont ensuite courbés à 90° sur 30 à 50 cm pour présenter chacun une partie sensiblement horizontale (quand le porte charge mobile est en position route) parallèle à l'axe du véhicule. Les deux parties extrêmes des tubes (4) sont parallèles et distantes de 40 à 50 cm ce qui leur permet de supporter une ou plusieurs bicyclettes posées par l'intermédiaire de leurs cadres et fixées par des attaches à pincement ou par des courroies ou des liens élastiques.

Le verrouillage du porte charge mobile (2) se fait dans cette réalisation de la façon suivante : Le support fixe (1) comporte deux douilles fixes (6) selon des axes parallèles aux axes des tubes (4) quand le porte charge mobile est en position relevée, décalées de 4 mm environ vers le plan de symétrie du véhicule, d'un diamètre identique ou voisin de celui des tubes (4). Une tige (5) est disposée dans l'axe des tubes (4), mobile en rotation sur un angle de environ 90° et en translation d'une longueur environ égale à la longueur des douilles (6) (la rotation et la translation étant réalisées selon l'axe du tube (4) correspondant). L'extrémité supérieure de la tige (5) sort du tube (4) par un trou situé dans le coude que fait le tube dans la partie supérieure.

Cette extrémité de la tige (5) située à l'extérieur du tube (4), est coudé à environ 90° de façon à permettre de commander la translation et la rotation que nous venons de caractériser de la tige (5) par rapport aux tubes (4) et qui permet, quand le porte charge est en position haute, de faire pénétrer l'extrémité inférieure des tiges (5) dans les douilles (6) correspondantes pour immobiliser le porte charge amovible en position haute. Le mouvement de rotation (environ 90°) de la tige (5) par rapport au tube (4) est utilisé pour rattraper les jeux existants entre tube (4) - tige (5) et tige (5) et douille (6). En effet, l'extrémité de la tige (5) d'un diamètre inférieur au diamètre intérieur de la douille (6) et décentrée par rapport à la partie centrale de la tige (5), ce qui permet à cette extrémité de (5) de pénétrer facilement dans la douille (6) quand on réalise le mouvement de translation de (5) par rapport à (6), d'autre part, la rotation de (5) par rapport au tube (4) et à la douille (6) permet de rattraper le jeu existant entre l'extrémité de la tige (5) et la douille (6). Nous obtenons ainsi une liaison sans jeux entre le porte charge mobile (2) et le support fixe (1) et d'une manoeuvre aisée. Une réalisation a été faite avec des tubes (4) de diamètre 25/20 mm, une tige (5) de diamètre 19/17 mm très légèrement cintrée dans sa partie située dans le tube (4), l'extrémité de la tige (5) ayant un diamètre de 16 mm et une excentration de 4 mm de l'extrémité de la tige (5) par rapport à l'axe de la tige (5) dans sa partie centrale et d'un décalage de 4 mm des axes des douilles (6) et des tubes (4) correspondants quand le porte charge mobile (2) est en position relevée.

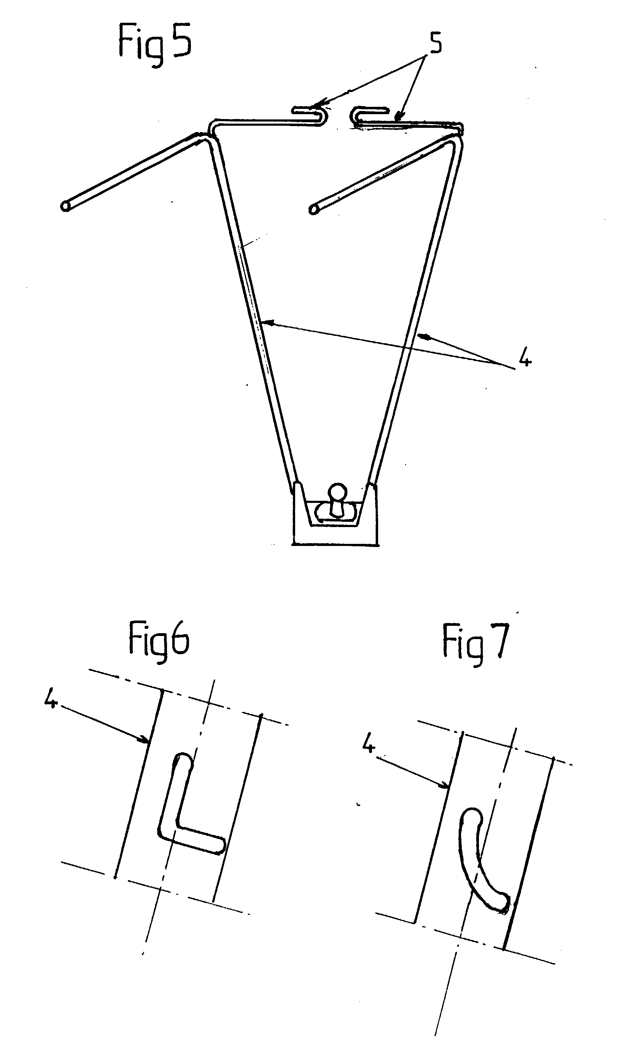

Pour avoir un verrouillage sûr du porte charge mobile (2) sur le support fixe (1), il est réalisé dans chaque tube (4) une lumière recevant un ergot solidaire de la tige (5), la forme des lumières permettant de contrôler les déplacements de la tige (5) par rapport au tube (4) et, notamment, d'interdire une translation de la tige (5) vers le haut quand cette tige (5) est en position verrouillée. La forme des lumières peut être soit en L (figure 6)(la partie verticale selon une partie de génératrice du tube (4) contrôlant la translation, la partie horizontale selon une partie de circonférence du tube contrôlant la rotation) soit selon une partie hélicoïdale (figure 7), la translation et la rotation étant simultanées, soit selon une forme intermédiaire entre les deux précédentes.

La sécurité du verrouillage est complétée par l'immobilisation de l'extrémité supérieure des tiges (5) en position verrouillée par attachement de ces extrémités entre elles, ce qui interdit les rotations de ces tiges (5)(les rotations de chaque tige étant de sens contraire l'une par rapport à l'autre pour réaliser les opérations de verrouillage) ou par attachement des extrémités de ces tiges (5) à une partie solidaire du porte charge mobile (2).

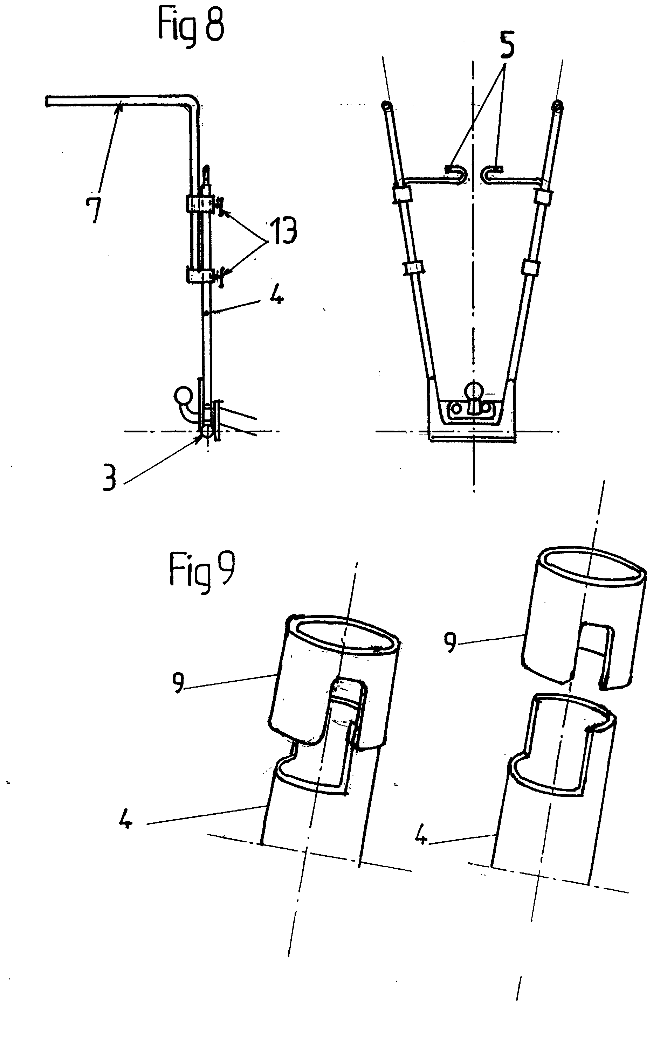

Une variante de la première réalisation est décrite ci-après (figures 8-9). Les modifications concernent la réalisation de l'extrémité supérieure des tubes (4) pour réduire l'encombrement du porte charge mobile (2) quand il n'est pas utilisé et faciliter ainsi son stockage. Selon cette variante, les tubes (4) parties du porte charge mobile (2)ont une longueur de environ 50 à 60 cm et sont uniquement rectilignes sur leur partie supérieure. Deux supports de bicyclettes coudés (7), un par tube (4) viennent coulisser sur les tubes (4) par l'intermédiaire de bagues (8) (2 pour chaque support (7)), permettant au support (7) de coulisser linéairement le long des tubes (4) et d'être libres en rotation autour des tubes (4). Les supports (7) peuvent être mis en position stockage (encombrement minimum) par coulissement vers le bas des tubes (4) et rotation pour être dans le plan des tubes (4). Dans ces conditions, le porte charge amovible (2) se réduit à un volume plat de faible épaisseur (5cmX60cmX40cm). Les supports (7) peuvent être placés en position d'utilisation en les mettant en position haute par coulissement le long des tubes (4) et rotation pour placer l'extrémité coudée perpendiculaire au plan des tubes (4) vers l'extérieur du véhicule, avec une immobilisation par des vis (13) avec molette de manoeuvre, placées dans des parties filetées réalisées dans chaque bague. L'extrémité des vis pénètre dans des trous réalisés dans les tubes (4) quand les supports (7) sont dans la position souhaitée.

La réalisation du contrôle de la position des tiges de commande (5) se fait de la façon suivante : Les tiges de commande (5) sont coudées à leur sortie des tubes (4). Un cabochon (14) (figure 9) cylindrique vient s'emboîter sur l'extrémité supérieure des tubes (4). Les cabochons (14) et la partie supérieure des tubes (4) sont découpés de façon, qu'après emboîtement, les lumières de guidage (en L ou hélicoïdales) des tiges de commande (5) soient réalisées par la combinaison des formes des cabochons (14) et des tubes (5).

Le montage se fait comme suit : mise en place de la tige de guidage (5) dans le tube (4) correspondant, mise en place du cabochon (14) sur le tube (4), immobilisation du cabochon (14) sur le tube (4) (soudure ou autre). Le verrouillage des tiges de commande (5) se fait de la même façon que précédemment, la partie coudée des tiges (5) passant dans les lumières réalisées par les cabochons (14) et les tubes (4), ces lumières assurant le contrôle des déplacements des tiges (5) par rapport aux tubes (4) pour obtenir un verrouillage sûr.

Une deuxième réalisation est réalisée comme suit (figure 2) :

Le dispositif comprend toujours un support fixe (1) adapté sur un attelage de remorque ou sur la partie arrière d'un véhicule, un porte charge mobile (2) monté pivotant par rapport au support fixe (1) sur un axe (3) horizontal perpendiculaire au sens de déplacement du véhicule, cet axe (3) étant positionné sur la partie haute du support fixe (1). Le porte charge amovible (2) comporte toujours des tubes (4) sensiblement verticaux quand il est en position relevée ou position de route et des tiges de commande (5) dont l'extrémité vient se placer en position verrouillée dans des douilles ou des arrêts solidaires du support fixe (1) et situés en-dessous du plan horizontal de l'axe (3). Les tiges de commande (5) et les tubes supports (4) peuvent être réalisés comme décrit dans la première réalisation. La position de l'axe (3) en partie supérieure du support fixe (1) nécessite, lors de l'inclinaison vers l'arrière du porte charge mobile (2), que l'extrémité inférieure des tubes (4) et des tiges (5) ne vienne pas heurter le véhicule, ceci peut être réalisé par l'un des moyens suivants :
- Le support (1) est situé en-dessous du niveau bas du véhicule
- Le support (1) est suffisamment distant de l'arrière du véhicule pour éviter toute interférence
- La partie basse des tubes (4) ne se prolonge pas au-delà du niveau de l'axe (3) et les tiges de commande (5) se déplacent verticalement suffisamment pour éviter toute interférence avec le véhicule.

Cette réalisation permet d'avoir le plan des tubes (4) sensiblement horizontal quand le porte charge est en position abaissée donc de pouvoir installer sur les tubes (4) une plate-forme (9) permettant un meilleur accès à l'arrière du véhicule.

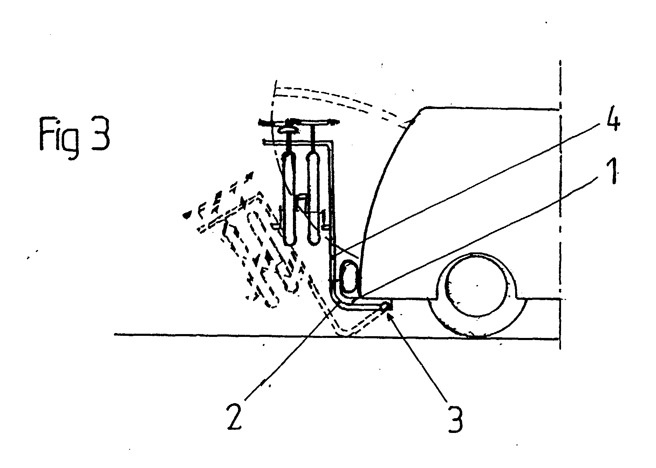

Une troisième réalisation est faite comme suit (figure 3):

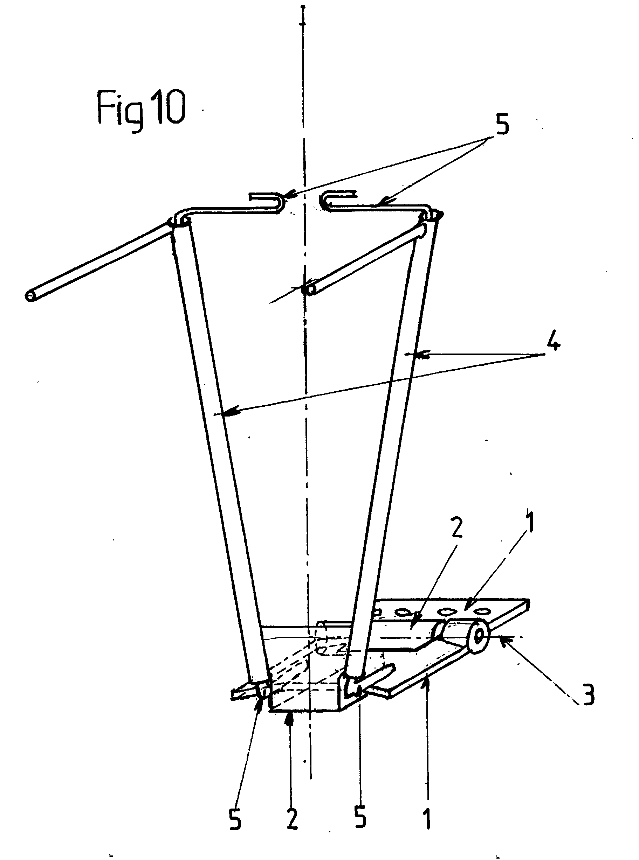

Le dispositif comprend toujours un support fixe (1) attaché sur un attelage de remorque ou sur une partie arrière du véhicule, un porte charge mobile (2) monté pivotant par rapport au support fixe (1) autour d'un axe (3) horizontal et perpendiculaire au sens de déplacement du véhicule, cette axe (3) étant placé dessous le véhicule et dans une zone située entre l'arrière du véhicule et l'essieu arrière du véhicule (sans interférence avec celui-ci). Le porte charge mobile (2), en position levée ou de route, comprend une première partie horizontale pivotant sur l'axe (3), une seconde partie sensiblement verticale réalisée par un ou plusieurs tubes (4), ces tubes (4) servant de support à des dispositifs de fixation de charge et de guide à des tiges de commande (5) permettant de réaliser le verrouillage et le déverrouillage du porte charge mobile (2) sur le support fixe (1). Dans cette réalisation, la partie inférieure de la ou des tiges de commande (5) comprend une partie coudée à environ 90° par rapport à l'axe des tubes (4), cette partie coudée venant par rotation (figure 10) se placer en position verrouillage sur une partie correspondante du support fixe (1) pour maintenir le porte charge amovible en position haute. Une variante de réalisation de l'extrémité des tiges de commande (5) est représentée sur la figure (11). Dans cette variante, une partie sensiblement demi-circulaire (10) est fixée dans un plan perpendiculaire à l'axe des tiges de commande (5). La rotation des tiges de commande (5) place les parties demi-circulaires (10)sur une partie du support fixe (1) sensiblement perpendiculaire à l'axe des tubes (4) quand le porte charge mobile (2) est position relevée pour assurer le verrouillage du porte charge mobile (2) sur le support fixe (1). Pour cette troisième réalisation, le verrouillage nécessite une simple rotation des tiges (5) qui sont immobilisées par l'intermédiaire de leurs parties supérieures comme déjà indiqué pour les première et deuxième réalisations.

Cette troisième réalisation présente l'intérêt de permettre de faire reposer sur le sol le porte charge mobile (2) en position basculée sur l'arrière sur la partie coudée ce qui limite le déplacement de celui-ci. D'autre part, la position sous le véhicule du support fixe (1) rend celui-ci particulièrement discret quand le porte charge mobile (2) n'est pas utilisé. Cette réalisation est particulièrement bien adaptée dans le cas de l'utilisation d'un attelage de remorque comportant une boule d'attelage fixée sur une tige elle-même boulonnée sur un support placé dessous le véhicule.

La réalisation de l'articulation du porte charge mobile (2) sur le support fixe (1) peut être réalisée par tous autres moyens que l'utilisation d'un axe (3) dès l'instant que ces moyens permettent :
- une rotation du porte charge mobile (2) par rapport au support fixe (1) autour d'un axe horizontal perpendiculaire au sens de déplacement du véhicule
- une immobilisation du porte charge mobile (2) par rapport au support fixe (1) quand le porte charge mobile (2) est mis en position relevée
- une immobilisation dans le plan horizontal du porte charge mobile (2) par rapport au support fixe (1), que le porte charge soit en position relevée ou en position abaissée
- une possibilité d'assemblage et de désassemblage facile du porte charge mobile (2) sur le support fixe (1)
- un maintien par gravité au minimum de la liaison entre le porte charge mobile (2) et le support fixe (1) quand le porte charge mobile (2) est en position baissée ou est mis en rotation pour atteindre la position relevée.

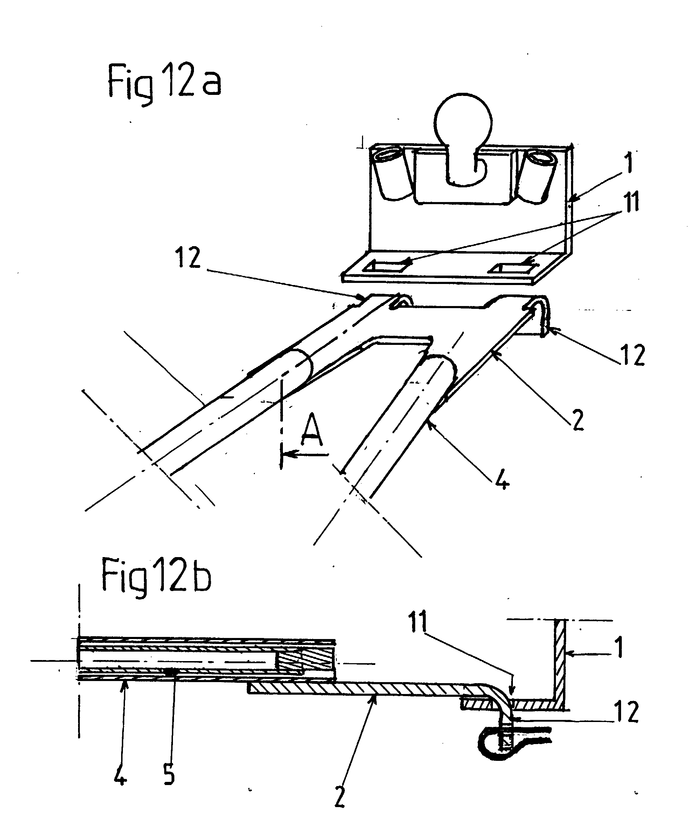

Une telle articulation peut être réalisée comme suit (figure 12 (a) et 12 (b)) :

Le support fixe (1) présente deux lumières (11) de forme rectangulaire alignées selon l'axe fictif (3) horizontal et perpendiculaire au sens de déplacement du véhicule. Le porte charge mobile (2) présente deux crochets (12) venant se placer dans les lumières (11) lors du montage du porte charge mobile (2) sur le support fixe (1). La forme partiellement circulaire des crochets permettra le pivotement vers l'avant du porte charge jusqu'à ce qu'il vienne en position verticale et en butée contre le support fixe (1) pour mettre le porte charge mobile (2) en position relevée et réaliser toutes les fonctions exposées précédemment. Diverses formes de lumières, de nombre de lumières, de crochets peuvent être utilisés. Le maintien du porte charge mobile (2) en position abaissée sur le support fixe (1) peut être amélioré en plaçant dans l'extrémité des crochets (12) une goupille amovible empêchant tout démontage intempestif.

Une variante des première et troisième réalisations du verrouillage du porte charge mobile (2) est la suivante : l'extrémité inférieure de la tige (5) prend appui directement sur une partie de l'attelage de remorque quand la tige (5) est mise en position de verrouillage par rotation. Dans le cas de la première réalisation, l'extrémité inférieure des tiges de commande (5) du verrouillage vient en position verrouillée prendre appui sur le devant de la partie verticale, c'est-à-dire sur la face située vers l'avant du véhicule, de l'attelage de remorque supportant le crochet de remorquage. Dans le cas de la troisième réalisation, la partie inférieure des tiges de commande (5) du verrouillage vient se placer en position verrouillée sur le dessus de la plaque verticale de l'attelage de remorque supportant le crochet d'attelage. Cette variante de réalisation permet de supprimer les parties du support fixe (1) (douilles (6), surfaces d'appui) qui assurait les mêmes fonctions et le support fixe (1) ne conserve comme fonction que de devoir supporter l'axe ou l'articulation (3). Dans ces conditions, cette fonction peut être facilement intégrée à l'attelage de remorquage lors de sa fabrication.

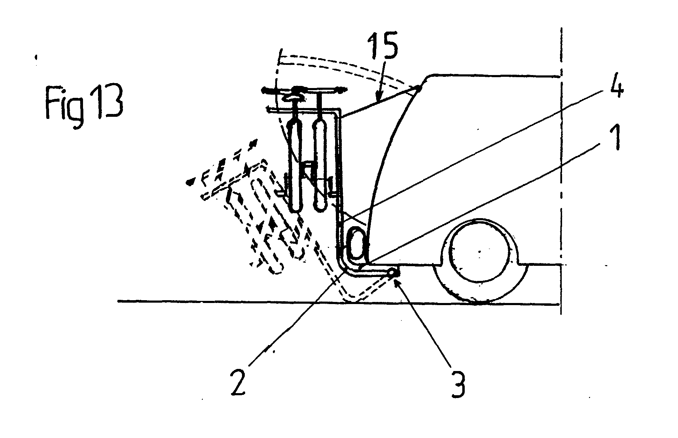

La réalisation du maintien en position relevée du porte charge mobile (2), selon les diverses solutions d'articulation exposées, peut être réalisée (figure 13) en plaçant entre la partie supérieure du porte charge mobile (2) et une forme en saillie du véhicule placée sur sa porte arrière supérieure (partie supérieure de porte ou hayon arrière par exemple) une ou plusieurs sangles (15) assurant ce maintien en position relevée du porte charge mobile (2).

Enfin, le porte charge mobile (2) peut prendre une forme adaptée à différents types de charges (colis, ski,...) dès l'instant que, en position baissée, l'ouverture de la porte ou du hayon arrière soit libre. Le porte charge mobile (2) peut aussi comporté un dispositif permettant d'adapter différentes formes de caisse, panier, coffre, de façon démontable pour élargir son utilisation, la fixation de ces adaptations se faisant par vis, écrou, crochet... ou combinaison de différents moyens. Un dispositif amovible de plaque d'immatriculation et d'éclairage peut être fixé sur l'arrière du porte charge mobile (2) et raccordé électriquement à une prise électrique de transmission des commandes d'éclairage comme celles existant sur les attelages de remorque.

Des solutions exposées dans les différentes réalisations peuvent être utilisées partiellement ou en combinaison pour construire un dispositif correspondant aux objectifs de l'invention sans entraîner de novation par rapport à la présente demande de brevet.

## Revendications

1. Un porte charge, adaptable sur la partie arrière d'un véhicule automobile pour permettre à l'arrêt du véhicule, l'ouverture de la porte ou du hayon arrière du véhicule comprenant un support fixe (1) attaché sur la partie arrière basse du véhicule, un porte charge mobile (2) articulé sur le support fixe (1) autour d'un axe d'articulation (3) de direction sensiblement horizontale et perpendiculaire à l'axe de déplacement du véhicule cet axe étant situé horizontalement en-dessous de la partie basse de la porte ou du hayon arrière du véhicule, ce porte charge mobile (2) ayant une position haute permettant le déplacement du véhicule une position basse par pivotement vers l'arrière et le bas autour de l'axe (3) permettant l'ouverture complète de la porte ou du hayon arrière du véhicule, caractérisé par une articulation du porte charge mobile (2) sur le support fixe (1) réalisée par une chape disposée sur le support fixe (1), un ou plusieurs manetons disposés sur le porte charge mobile (2), un axe (3) assurant la liaison des chapes et manetons, un dispositif de maintien du porte charge mobile (2) permettant de le maintenir en position haute lors du déplacement du véhicule, ce dispositif de maintien, verrou ou sangle, étant manoeuvrable de la partie supérieure du porte charge mobile (2).

2. Un porte charge, adaptable sur la partie arrière d'un véhicule automobile pour permettre à l'arrêt du véhicule l'ouverture de la porte ou du hayon arrière du véhicule, comprenant un support fixe (1) attaché sur la partie basse du véhicule, un porte charge mobile (2) articulé sur le support fixe (1) autour d'une articulation d'axe sensiblement horizontal et perpendiculaire à l'axe de déplacement du véhicule cette articulation étant située horizontalement en-dessous de la partie basse de la porte ou du hayon arrière du véhicule, ce porte charge mobile (2) ayant une position haute permettant le déplacement du véhicule une position basse par pivotement vers l'arrière et le bas permettant l'ouverture complète de la porte ou du hayon arrière du véhicule, caractérisé par la réalisation de l'articulation du porte charge mobile (2) sur le support fixe (1) par un ou plusieurs trous réalisés dans le support fixe (1) selon un axe sensiblement horizontal et perpendiculaire au sens de déplacement du véhicule, un nombre correspondant de crochets faisant partie du porte charge mobile (2) et s'emboîtant dans le ou les trous réalisés dans le support (1) quand le porte charge est en position basse, le ou les crochets ayant une forme pouvant être sensiblement arrondie permettant de relever le porte charge mobile (2) en le laissant accouplé au support fixe (1) et de l'immobiliser dans le sens vertical quand il est relevé, un dispositif de maintien du porte charge mobile (2) permettant de le maintenir en position haute lors du déplacement du véhicule, ce dispositif de maintien, verrou ou sangle prenant appui sur une partie du support fixe ou du véhicule, étant manoeuvrable de la partie supérieure du porte charge mobile (2).

3. Dispositif selon la revendication 1) ou 2) caractérisé par la fixation du support fixe (1) sur un dispositif d'attache remorque de façon démontable ou non et une réalisation du porte charge mobile (2) de part et d'autre de l'attache remorque pour permettre d'utiliser simultanément le porte charge et de remorquer une remorque.

4. Dispositif selon la revendication 1), 2) ou 3) caractérisé par un support fixe (1) ayant une partie sensiblement verticale perpendiculaire au sens de déplacement du véhicule supportant un axe ou une articulation (3), un porte charge mobile (2) comportant une surface d'appui sensiblement verticale perpendiculaire au sens de déplacement du véhicule en position verrouillée et comportant la partie mobile de l'articulation (3)., une ou plusieurs parties tubulaires (4) de position sensiblement verticale solidaire du porte charge mobile (2), un ou plusieurs dispositifs de verrouillage du porte charge mobile (2) sur le support (1), ces dispositifs comportant chacun une tige de commande (5) placée dans la partie tubulaire (4) ou parallèlement et attachée à la partie tubulaire (4) correspondante avec liberté de rotation et de translation autour ou selon l'axe de la partie tubulaire (4), les tiges de commande (5) comportant en leurs parties supérieures un dispositif de manoeuvre pouvant être une forme coudée formant manivelle pour permettre les opérations de verrouillage et déverrouillage du porte charge mobile (2) sur le support fixe (1) et dont la partie inférieure desdites tiges de commande (5) vient se placer dans ou contre une partie correspondante du support fixe (1), non située dans l'alignement de l'axe (3),pour empêcher la rotation du porte charge mobile (2) par rapport au support fixe (1) et assurer le verrouillage du porte charge mobile (2) sur le support fixe (1) quand les tiges de commande (5) du verrouillage sont en position verrouillage.

5. Dispositif selon la revendication 4) caractérisé par l'appui de l'extrémité des tiges de commande (5) qui assure le verrouillage du porte charge mobile (2) en position relevée, directement devant la plaque verticale perpendiculaire au sens de déplacement du véhicule de l'attelage de remorquage qui supporte le crochet de remorquage, cette réalisation réduisant le support fixe (1) à sa fonction de support de l'articulation du porte charge mobile (2).

6. Dispositif selon les revendications 1), 2) ou 3) caractérisé par un support fixe (1) comportant une partie horizontale, un porte charge inclinable et démontable articulé sur le support fixe (1) et comportant un ou plusieurs parties tubulaires (4) verticales permettant de supporter la charge, une tige de commande (5) placée dans chaque partie tubulaire (4) ou attachée parallèlement à la partie tubulaire (4) correspondante avec liberté de rotation autour de l'axe de la partie tubulaire (4), les tiges de commande (5) comportant à leur extrémité inférieure une partie sensiblement perpendiculaire à l'axe de la tige de commande (5), cette partie venant se placer par rotation au-dessus d'une partie horizontale du support fixe (1) quand la tige de commande (5) est placée en position verrouillage pour maintenir le porte charge mobile (2) en position haute.

7. Dispositif selon les revendications précédentes 4), 5) ou 6) caractérisé par le guidage de la ou des tiges de commande (5) au moyen d'un ergot solidaire de la tige de commande (5) et d'une rainure située sur la ou les parties tubulaires (4) ou réciproquement, l'ergot étant placé dans la rainure de façon à ce qu'une position en rotation de la tige de commande (5) détermine la position en translation de la tige de commande (5) par rapport aux parties tubulaires (4).

8. Dispositif selon la revendication 2) caractérisé par la mise en place à l'extrémité du ou des crochets disposés sur le porte charge mobile (2) et s'emboîtant sur le support fixe (1), de goupilles amovibles permettant après leur mise en place d'empêcher le désaccouplement du porte charge mobile (2) quand celui-ci est en position abaissée.

9. Dispositif selon l'une des revendications précédentes 4), 5) ou 6), caractérisé par le maintien de la ou des tiges de commande (5) en position verrouillée par un dispositif situé sur les parties tubulaires (4) assurant l'immobilisation de la ou des tiges de commande (5) en position verrouillée par attachement de l'extrémité de manoeuvre de la tige de commande avec une partie du porte charge mobile (2) ou par attachement des deux extrémités de manoeuvre des tiges de commande entre elles, dans ce cas le sens du mouvement de rotation de verrouillage de chaque tige étant opposé et leur extrémités assurant la commande venant en vis-à-vis en position verrouillage.

10. Dispositif selon l'une des revendications 1), 2) ou 3) précédentes caractérisé par un système de maintien du porte charge mobile (2) réalisé par une ou plusieurs sangles réglables en longueur assurant la liaison entre la partie supérieure du porte charge mobile (2) et une partie voisine du véhicule, la mise du porte charge en position basse étant assurée par enlèvement de la ou des sangles.

11. Un porte charge selon la revendication 4) caractérisé par un ou plusieurs dispositifs de verrouillage du porte charge mobile (2) sur le support fixe (1), ces dispositifs comportant chacun une tige de commande (5) placée dans la partie tubulaire (4) correspondante avec liberté de rotation et de translation autour ou selon l'axe de la partie tubulaire (4), la tige de commande (5) comportant une partie inférieure qui vient se placer en position verrouillée dans une douille (6) solidaire du support fixe (1), l'axe de cette douille étant très sensiblement parallèle à l'axe de la partie tubulaire (4) correspondante quand le porte charge mobile (2) est en position relevée et légèrement décentré par rapport à cet axe, la partie inférieure de la tige de commande (5) venant se placer dans la douille (6) ayant une forme sensiblement cylindrique légèrement décentrée par rapport à l'axe de la tige (5) et de diamètre inférieur au diamètre intérieur de la douille (6) de façon à ce que, lors de la manoeuvre de verrouillage, la tige (5) puisse, par translation, pénétrer dans la douille (6) et, ensuite, par rotation, puisse exercer une pression sur la douille (6) par un effet de «coin» pour éliminer tout déplacement du porte charge mobile (2) par rapport au support fixe (1) quand la tige de commande (5) est en position verrouillée.
